# EUROPEAN PATENT APPLICATION

(11) **EP 1 930 920 A1**
(43) Date of publication of application: **11.06.2008**
(21) Application number: 06810625.1
(22) Date of filing: 27.09.2006
(51) Int. Cl.: H01G 9/058, H01G 9/025

(54) **METHOD FOR PRODUCING ELECTRODE MATERIAL FOR CAPACITOR, ELECTRODE FOR CAPACITOR AND CAPACITOR**

(30) Priority: 29.09.2005 JP 2005284008; 21.10.2005 JP 2005306626
(71) Applicant: Kabushiki Kaisha Equos Research, Chiyoda-ku Tokyo 101-0021 (JP)
(72) Inventor: MIYAGI, Kei, Tokyo 1010021 (JP)
(74) Representative: TBK-Patent
(86) International application number: PCT/JP2006/319134
(87) International publication number: WO 2007/037254

(57) **Abstract**

A capacitor electrode material having high capacitance and capable of handling large current and a manufacturing method thereof are provided. In addition, a capacitor electrode and a capacitor having high capacitance and capable of handling large current, are also provided.

After dipping a carbon nanotube into an electropolymerization monomer solution to adhere the electropolymerization monomer to the carbon nanotube (adsorption step), the carbon nanotube is electropolymerized in an electrolytic solution containing no electropolymerization monomer so as to produce an electroconductive polymer-adhered carbon nanotube.

## Description

### TECHNICAL FIELD

The present invention relates to a capacitor, a capacitor electrode, and a method of manufacturing a capacitor electrode material having high capacitance and capable of handling large current.

### BACKGROUND ART

When first developed, capacitors were applied as low output power supplies for use as backup power supplies for integrated circuit (IC) memory circuits. However, recently there has been a rapid increase in the demand for capacitors for use as high output power supplies handling for use in applications such as the collection of braking energy recovered from regenerative braking systems of hybrid motor vehicles, and the like. Therefore, there is a demand for high capacitance capacitors capable of handling large current.

Conventionally, activated charcoal has been widely used as a capacitor electrode material. Because the surface area per unit weight of an electrical double layer capacitor formed with activated charcoal is large, the capacitor possesses an outstanding property in that it is capable of discharging a large amount of electrical energy. However, with only activated charcoal, the degree of electrical conductivity is small, and when activated charcoal has been used as the sole capacitor electrode material, a problem has occurred in that the internal resistance of the capacitor becomes large, and thus it is difficult to handle large current due to increase in infrared radiation (IR) component and the like.

Therefore, an attempt has been made to reduce the internal resistance of the electrical double layer capacitor by mixing carbon nanotubes, which have excellent electrical conductivity, with activated charcoal (see Patent Document 1).
Patent Document 1: Japanese Patent Application Publication No. JP-A-2000-124079

However, because the specific surface area of the carbon nanotubes is much smaller than that of activated charcoal, the surface area of the electrical double layer capacitor per unit weight is also small. Therefore, when activated charcoal has been mixed with carbon nanotubes, although the electrical conductivity is improved, there is a risk that the amount of electrical energy that can be discharged will be smaller.

In order to overcome the above-described problems with capacitors that utilize carbon nanotubes, a capacitor in which carbon nanotubes and electroconductive polymer are conjugated has been proposed (seePatent Document 2).
Patent Document 2: Japanese Patent Application Publication No. JP-A-2005-50669

Because electroconductive polymer is capable of storing electrical energy by way of a redox reaction (i.e. the doping/dedoping of dopant) it is a focus of substantial attention as a material for application in redox capacitors capable of discharging extremely large amounts of electrical energy (so-called super capacitors). However, there is a problem in that the electrical conductivity of electroconductive polymers is inferior. Due to the fact that in the capacitor described in Patent Document 2 carbon nanotubes are coated with an electroconductive polymer, the capacitor combines the strong point of the excellent electrical conductivity property of the carbon nanotubes and the strong point of the capacity for releasing a large amount of electrical energy of the electroconductive polymer, whereby it may be possible to produce a high capacitance capacitor capable of handling large current.

### DISCLOSURE OF THE INVENTION

### Problems to be Solved by the Invention

However, when the material for the capacitors, in which an electroconductive polymer layer that is thinner than the submicron range is coated uniformly on the carbon nanotube, is manufactured, the following problems have been encountered.

For example, when the surface of the carbon nanotube is electropolymerized and coated with an electroconductive polymer in an electrolytic polymerization monomer solution, as in the case of the manufacturing method described in the aforementioned Patent Document 2, there is non-uniformity in the chemical properties of the surface of the electrodes, and particularly when the current is large, electrical potential becomes distributed on the surface of the electrodes due to the construction of the electrolysis cell and the like. Further, from a more molecular-level perspective, when electric current becomes concentrated at the end portions of the elongated carbon nanotubes, the electroconductive polymer molecules are deposited on the aforementioned end portions. Compared to portions on which electroconductive polymer molecules have not been deposited, the portions on which the electroconductive polymer molecules have been deposited come to easily attract further deposition of the electroconductive polymer molecules, whereby the thickness of the film deposited on those portions becomes thicker in an accelerated manner, and the distribution of the electroconductive polymer molecules becomes segregated. Therefore, it is difficult to uniformly coat capacitor electrodes formed from carbon nanotubes with an electroconductive polymer film. Further, the electrical conductivity of the portions that have been thickly coated with electroconductive polymer becomes poor, and when the current is large, the aforementioned portions are incapable of handling a volume of current corresponding to their capacity.

Therefore, it is possible to conceive of a method of conjugating carbon nanotubes and an electroconductive polymer by mixing an electroconductive polymer that has been formed in a separate manufacturing process with the carbon nanotubes. However, because electroconductive polymers are insoluble in almost all solvents, it is not possible to use a conjugating method for coating the carbon nanotubes with the electroconductive polymer in which the electroconductive polymer is first thinned out by means of a solvent before being applied to the surface of the carbon nanotubes. Further, when the electroconductive polymer is made soluble by subjecting it to a process to reduce the molecular weight thereof, a chemical modification process or the like, there is a possibility that the properties of the electroconductive polymer will be changed thereby. Still further, because it is difficult to reduce the particle size of the electroconductive polymer to a submicron dimension, it is also difficult to use a conjugating method in which a fine powder of electroconductive polymer is adhered to the surface of the carbon nanotubes.

The present invention has been invented in consideration of the above-described existing circumstances, and it is an object of the present invention to provide a capacitor electrode material having high capacitance and capable of handling large current, and a manufacturing method thereof.
Further, it is an object of the present invention to provide a capacitor and a capacitor electrode having high capacitance and capable of handling large current.

### Means for Solving the Problem

The capacitor electrode material manufacturing method according to the present invention is characterized by including:
an adsorption step for adsorbing an electropolymerization monomer to a surface of a carbon nanotube; and
a polymerization step for electropolymerizing in an electrolytic solution that substantially contains no electropolymerization monomer the carbon nanotube having the electropolymerization monomer adsorbed thereto.

According to the capacitor electrode material manufacturing method of the present invention, first, as the adsorption process, the electropolymerization monomer is adsorbed to the surface of the carbon nanotube. There is no particular limitation as to the type of the carbon nanotube, which may be a single layer carbon nanotube or a multi-layer carbon nanotube, and the molecular structure thereof may be any of the arm-chair type, the zigzag type, and the chiral type. Further, a vapor-grown carbon fiber is also included. Still further, "adsorption" refers to the all phenomena in which the electropolymerization monomer exist on the surface of the carbon nanotube, without regard to the type of the adsorption method, such as physical adsorption or chemical adsorption. There are no particular limitations as to the method of adhesion, however, the electropolymerization monomer can be adhered to the surface of the carbon nanotube by dipping the carbon nanotube into an electropolymerization monomer solution, or by spraying the electropolymerization monomer solution onto the carbon nanotube.

The carbon nanotube may be subjected to the adsorption step in the powdered state as is; however, it may also be mixed with a fluoro-rubber binder, such as polyvinylidene fluoride or the like, and brought into contact with a collector electrode, such as an aluminum (Al) or gold (Au) mesh, and hot pressed, so as to be formed into an integral body, which is then subjected to the adsorption step. In this way, it becomes extremely easy to handle the carbon nanotube when adhering the electropolymerization monomer to the carbon nanotube in the adsorption step, or when applying electric current to the carbon nanotube in the polymerization step. Further, after being subjected to the polymerization step, the carbon nanotube can be used as a capacitor electrode without being subjected to any other process.

Still further, "electropolymerization monomer" refers to all monomers that can be electropolymerized to form electroconductive polymers. Conceivable electropolymerization monomers include pyrrole and the derivatives thereof, thiophene and the derivatives thereof, aniline and the derivatives thereof, benzene and the derivatives thereof, tetramethylpiperidine and the derivatives thereof, organic disulfide compounds, carbon sulfide compounds, heterocyclic carbon sulfide compounds, and the like.

Next, as the polymerization step, the carbon nanotube that has an electropolymerization monomer adhered to the surface thereof is electropolymerized in an electrolytic solution containing substantially no electropolymerization monomer to produce an electroconductive polymer-adhered carbon nanotube. In this electropolymerization step, because the step is carried out in an electrolytic solution containing substantially no electropolymerization monomer, the electropolymerization monomer is not supplied to the surface of the carbon nanotube from the electrolytic solution. Therefore, only the electropolymerization monomer adhered uniformly to the carbon nanotube in the adsorption step is electropolymerized, whereby it is possible to uniformly adhere an electroconductive polymer to the surface of the carbon nanotube. On the capacitor electrode material obtained by the above-described steps, there are no portions thickly coated with electroconductive polymer and having poor conductivity properties, and the capacitor electrode material has high capacitance and is capable of handling large current. Further, because the electropolymerization and the conjugating of the carbon nanotube with the electroconductive polymer are carried out simultaneously, the number of steps is reduced, and the manufacture process becomes simple and easy.

As to the electrolytic solution, it is preferable that the solvent has a wide potential window; for example, organic solvents such as propylene carbonate and the like, or any type of ionic liquid may be used. The "ionic liquid" refers to a molten salt that is in liquid form at room temperature, for example, combinations of quaternary ammonium cations having a nitrogen containing heterocyclic structure, such as imidazolium having an alkyl chain, pyridinium, pyrrolidinium, pyrazolidium, isothiazolidinium, isooxysazolidinium, or cations such as alkyl quaternary ammonium cations, phosphonium cations, sulfonium cations, and anions such as tetrafluoroboric acid, hexafluorophosphoric acid, tris(trifluoromethylsulfonyl) nitric acid, tris(trifluoromethylsulfonyl) carbon acid, organic carboxylic acid, halogen ion, and the like.

According to the capacitor electrode material manufacturing method of the present invention, the adsorption step and the polymerization step may be performed repeatedly in an alternating manner. If repeatedly performed in an alternating manner, by adjusting the number of times the steps are repeated or the concentration of the electropolymerization monomer, the thickness of the electroconductive polymer adhered to the carbon nanotube can be freely controlled.

In addition, the capacitor electrode material manufacturing method of the present invention may be further provided with a film thickening step for electropolymerizing the carbon nanotube in an electrolytic solution that contains electropolymerization monomer, after the above-described polymerization step has been completed. After the surface of the carbon nanotube has once been uniformly coated with electroconductive polymer by way of the polymerization step, the overpotential for deposition of the electroconductive polymer becomes low. Therefore, when the polymerization step is performed in the electrolytic solution containing electropolymerization monomer, it is possible to deposit the electroconductive polymer at a comparatively uniform speed across the entire surface of the carbon nanotubes quickly. Therefore, it is possible to quickly fabricate a capacitor electrode having high capacitance and capable of handling large current.

If the capacitor electrode material fabricated according to the capacitor electrode material manufacturing method of the present invention is used as a polarizable electrode, and a collector electrode is attached to the polarizable electrode, the capacitor electrode according to the present invention is produced. Further, the capacitor electrode of the present invention can be used to manufacture a capacitor.

Still further, the capacitor electrode material according to the present invention is a capacitor electrode material formed of a carbon nanotube that has a surface coated with an electroconductive polymer. The capacitor electrode material is characterized in that the thickness of the electroconductive polymer coating is 1/5 to 5 times the thickness of the diameter of the carbon nanotube.

If the thickness of the electroconductive polymer is equal to or greater than 1/5 of the diameter of the carbon nanotube, the volume of the capacitance as the redox type capacitor arising from the electroconductive polymer becomes large, whereby it becomes possible to use the capacitor electrode material of the present invention as a high-capacitance capacitor electrode material. Further, if the thickness of the electroconductive polymer is equal to or less than 5 times the diameter of the carbon nanotube, because the impedance does not becomes very large, the capacitor electrode material can be made capable of handling large current.

### BRIEF DESCRIPTION OF THE DRAWINGS

[FIG. 1] FIG. 1 is a graph showing the relation of the discharge capacity to the potential of a capacitor electrode material according to an example of the present invention.
[FIG. 2] FIG. 2 is a graph showing the relation of the discharge capacity to the potential of a capacitor electrode material of a comparative example.
[FIG. 3] FIG. 3 is an illustration of a cross-section of a capacitor.
[FIG. 4] FIG. 4 is a graph showing the relation of the discharge capacity to the potential of a capacitor electrode material manufactured utilizing poly(3-methylthiophene) powder according to another example of the present invention.

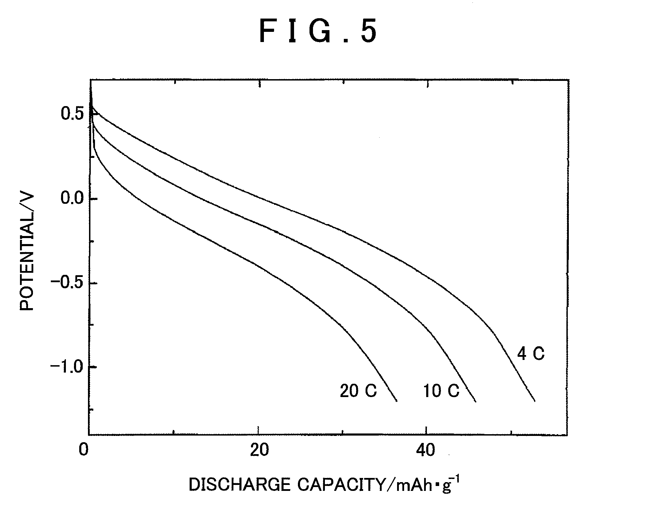

[FIG. 5] FIG. 5 is a graph showing the relation of the discharge capacity to the potential of a capacitor electrode material manufactured utilizing poly(3-methylthiophene) powder according to another comparative example.

### BEST MODES FOR CARRYING OUT THE INVENTION

Hereinafter, an example that embodies the present invention will be described in detail with respect to comparative examples.

### Example

An example of the present invention is a capacitor electrode material including a carbon nanotube having on the surface thereof a coating of poly(3-methylthiophene) formed by electropolymerizing 3-methylthiophene on the carbon nanotube; more specifically, the capacitor electrode material according to the example of the present invention was prepared according to the following sequence of steps.

### Preparatory Step

As a preparatory step, a powder of single layer carbon nanotube and a powder of poly vinylidenefluoride were mixed at a ratio of 80:20 by mass, and formed into a pellet having a 15mm φ discoid shape under a pressure of 14 MPa (pellet weight was approximately 25mg). Then, an Au mesh was situated on one face of the thus formed pellet, and the pellet was subjected to hot pressing in a hot press under a pressure of 5 MPa and at a temperature of 150°C to form a discoid shaped pre-electrode having affixed to one face thereof the Au mesh.

### Adsorption Process

Next, a thiophene solvent was prepared by adding 5% by volume of 3-methylthiophene to 0.5 M of TEABF₄/propylene carbonate solvent. Continuing, a two-compartment cell was prepared by dividing the working electrode compartment and the counter electrode compartment by a glass filter, and 0.5 M of the TEABF₄/propylene carbonate solvent was poured into each compartment. Then, the pre-electrode was dipped in the thiophene solvent, and after being washed in the 0.5 M of TEABF4/propylene carbonate solvent, the pre-electrode was inserted into the working electrode compartment of the two-compartment cell, and subjected to a controlled potential electrolysis process at +0.6 - +0.65 V for approximately three minutes counterposed to an Ag/Ag ion electrode, with the platinum electrode as the counter electrode. At this time, approximately 30 mA of current flew as a result of the polymerization reaction. The thus processed capacitor electrode was again dipped in the above-described thiophene solvent and subjected to the above described controlled potential electrolysis process, repeatedly for a total of four times, whereupon the fabrication of the capacitor electrode according to the example was completed.

### Comparative Example

As a comparative example, a capacitor electrode was fabricated utilizing a powder mixture obtained by mechanically mixing poly(3-methylthiophene) powder and single-layer carbon nanotube powder. That is to say, the solvent including the 0.5 M TEABF₄/propylene carbonate solvent to which 3-methylthiophene had been added was poured into the above-described two-compartment cell, and electropolymerized on the platinum electrode, whereby the poly(3-methylthiophene) is deposited thereon. The electropolymerization condition was: controlled potential electrolysis by application of 0.6 - 0.65 V to an Ag/Ag ion electrode. In this way, the poly(3-methylthiophene) deposited on the Au mesh was removed, and after being pulverized into powdered form in a pulverizing apparatus, the poly(3-methylthiophene) powder was added at a ratio of 2:1 to the single-layer carbon nanotube powder and mixed therewith to form a powder mixture. The powder mixture was again mixed, this time with a poly vinylidinefluoride powder at a ratio of 80:20 by mass, and formed into a pellet having a 1 5mm φ discoid shape under a pressure of 14 MPa. Then, an Au mesh was placed on one face of the thus formed pellet, and the pellet was subjected to hot pressing in a hot press under a pressure of 5 MPa and at a temperature of 150°C to form into an integral body. In this way, the capacitor electrode of the comparative example having the Au mesh affixed to one face thereof was fabricated.

### Evaluation

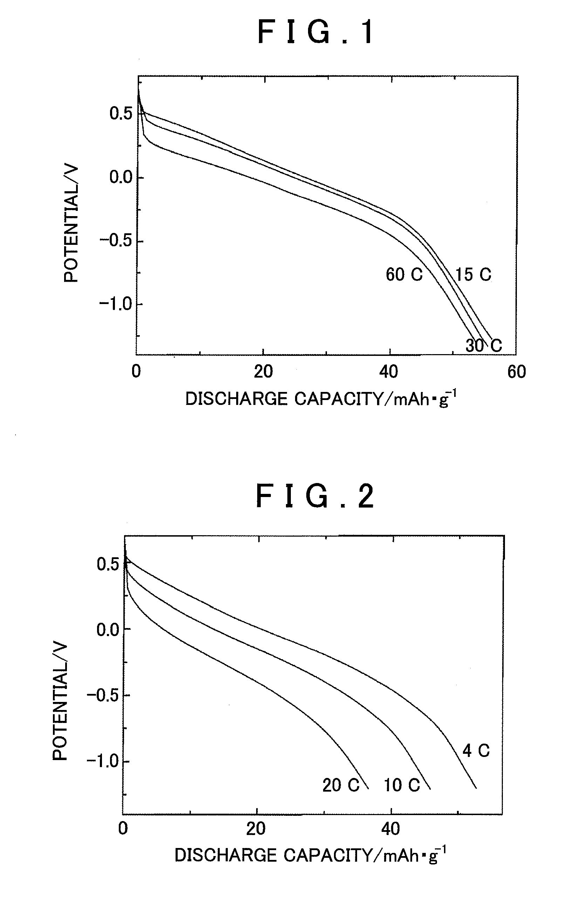

The discharge properties at a fixed current of the capacitor electrodes of the example and the comparative example obtained as described above were measured. That is to say, the 0.5 M TEABF₄/propylene carbonate solvent was poured into the cells used for the measurement, the capacitor electrode, a counter electrode formed of activated charcoal and a collector, and an Ag/Ag ion electrode were set up, a fixed current was applied continuously between the capacitor electrode and the counter electrode, and the relation between the amount of electricity discharged and the potential of the capacitor electrode was obtained. As shown in FIG. 1, the result of the above-described measurements revealed that the capacitor electrode of the example exhibited little change in potential even when current was applied at the high-speed discharge rates of 15C, 30C, and 60C. In contrast, the capacitor electrode of the comparative example exhibited drastic drops in potential at discharge rates of 4C, 10C and 20C, as shown in FIG. 2. From these results, it was clear that the capacitor electrode according to the example was capable of handling larger current and had a larger capacity for storing electrical energy, compared to the capacitor electrode of the comparative example.

### Capacitor Construction

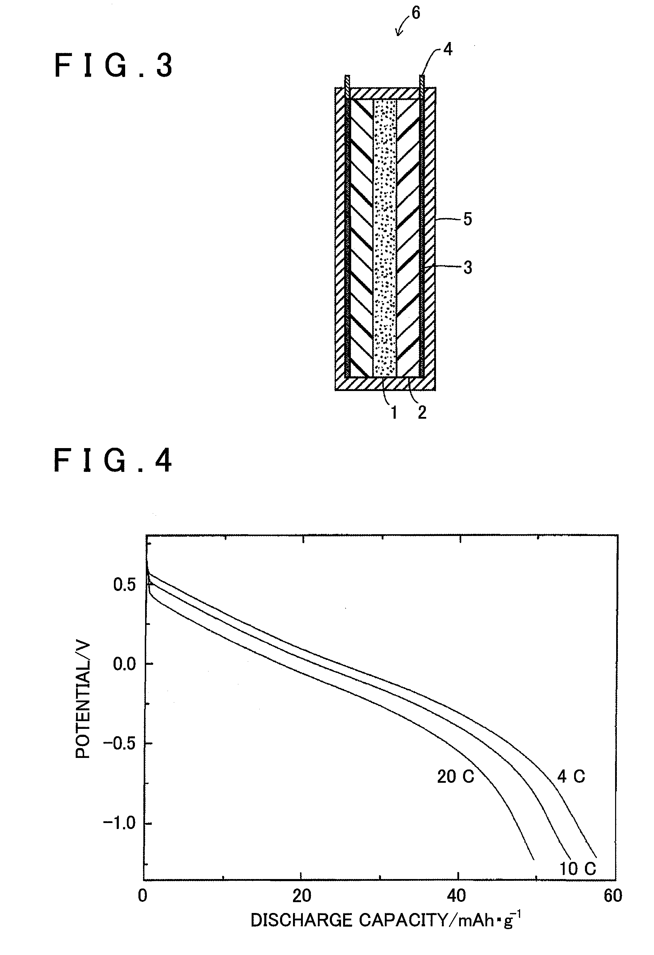

A capacitor can be built utilizing the capacitor electrode according to the above described example. That is to say, as shown in FIG. 3, a porous separator 1 impregnated with an electrolytic substance, such as propylene carbonate or the like, is interposed between two capacitor electrodes 2 that are formed according to the method of the above-described example and had an Au mesh electrode 3 affixed to one face thereof, respectively, such that the two capacitor electrodes 2 face each other. Then, a terminal 4 is attached to the upper end of the Au mesh electrode 3, and the capacitor is inserted into a capacitor case 5. In this way, a capacitor 6 can be manufactured.

As a result of sustained discussions and research efforts for development of a high-capacitance capacitor capable of handling large current, we have devised a novel method of manufacturing a polymer powder, and a method of manufacturing a capacitor electrode. A detailed explanation is provided hereinafter.

Polymer powders formed from of plastic, rubber or the like are important industrial raw materials used widely in all types of industrial fields. Therefore, a strong need exists for technologies for pulverizing polymers to manufacture polymer powders.

For example, technology for manufacturing fine powders of electroconductive polymers is sought after in the capacitor field for the reasons described below.

A redox type capacitor utilizing electroconductive polymers is a focus of attention as high-capacitance capacitors (see, for example, Patent Document 3). The redox type capacitor uses a doping/dedoping phenomenon in which dopant containing an electroconductive polymer is reversibly oxidized-reduced, and therefore have the advantage of possessing a much larger capacitance than an electrical double layer capacitors that utilizes activated charcoal.

However, because the electrical conductive property of electroconductive polymer easily changes, there is a risk that a capacitor manufactured solely from an electroconductive polymer will exhibit fluctuations in internal resistance, and thus it will become difficult to obtain large current. Therefore, there are known practices in which powders having outstanding electrical conductivity, such as carbon black and carbon nanotubes, are mixed with electroconductive polymer powders and the resulting mixture is used as a capacitor electrode material in order to improve the electrical conductivity property thereof. In capacitor electrodes utilizing a capacitor electrode material such as that described above, the finer the granularity of the powder of the electroconductive polymer, the larger the contact surface area between the electroconductive polymer powder and the powder having outstanding electrical conductivity, and the better the electrical conductivity thereof. Therefore, there is a demand for technology for efficiently and finely pulverizing electroconductive polymer.

However, because polymers are soft, it is difficult to pulverize them using a conventional milling apparatus. Therefore, methods have been proposed for cooling the polymers to an extremely low temperature in a cooling medium to harden them, and pulverizing the hardened polymers (see, for example, Patent Document 4).
Patent Document 3: Japanese Patent Application Publication No. JP-A-2002-203742
Patent Document 4: Japanese Patent Application Publication No. JP-A-2005-508748

However, there is a problem with the method of cooling polymers to an extremely low temperature and then pulverizing the cooled polymers in that the costs of the equipment therefor becomes great due to the necessity for large-scale apparatuses such as a cooling medium supplying apparatus, insulation of pulverizing vessels, and the like. Further, there is another problem in that the energy costs for the cooling manufacturing method become high.

Thus, it is desirable that an easy and low-cost method for finely pulverizing polymers be provided.
Further, there is a desire for a method of manufacturing capacitor electrode material that has high capacitance and is capable of handling large current.

The polymer powder manufacturing method described hereinafter includes a pulverization step of rubbing together a mixture of a polymer and a readily soluble ionic crystal or a readily soluble molecular crystal to produce a powder mixture, and an extraction step for removing the ionic crystal or the molecular crystal from within the powder mixture to obtain a polymer powder.

In the manufacturing process of the polymer powder, first, in the pulverization step, the polymer and the ionic crystal or the molecular crystal are rubbed against each other to mutually pulverize each other to obtain a powder mixture thereof. Then, in the extraction step, the ionic crystal or the molecular crystal is removed from the powder mixture, whereby it is possible to easily obtain only the finely powdered polymer.
There is no particular limitation with respect to the method of removing, however, the ionic crystal or the molecular crystal may be removed with a solvent in which only the ionic crystal or molecular crystal are soluble (e.g., water, alcohol, acetone, etc.) to extract the ionic crystal or the molecular crystal. Alternatively, the polymer and the ionic crystal or the molecular crystal may also be separated removed by using the difference between the specific gravity therebetween. Further, in the case of a molecular crystal, removal may be performed by sublimation.

Therefore, according to the polymer powder manufacturing method proposed hereinabove, fine polymer powder can be obtained easily and inexpensively without the use of complicated equipment.
To put it another way, the above-described method of manufacturing polymer powder may also be effective, for example, as a research method in a laboratory setting for the obtainment of small amounts of polymer powder for experimental use.

The above-described polymer powder manufacturing method may be applied in the manufacture of electroconductive polymer powder. According to the test results of the inventors of the present invention, the electroconductive polymer powder obtained by the above-described polymer powder manufacturing method was of extremely fine granularity. The mixture of the fine electroconductive polymer powder obtained as described above with carbon powder can be favorably used in a capacitor electrode material having high capacitance and capable of handling large current. Here, as to the carbon powder to be mixed with the electroconductive polymer powder, carbon nanotube powder, carbon black powder, and graphite powder, for example, may be used. In particular, because carbon nanotubes have outstanding electrical conductivity, the internal resistance of the capacitor becomes small, and it becomes possible to make a capacitor electrode material capable of handling large current.

There is no particular limitation as to the type of the polymer that is to be a subject of pulverization. In the case that the polymer is to be an electroconductive polymer, for example, polypyrrole, polyaniline, polyfuran, polyselenophene, poly isothianaphthene, polyphenylensulfide, polyphenylenoxide, polythiophene, polyphenylenevinylene, polythiophenevinylene, polyphenoleniylene, or the derivatives thereof, or the copolymers thereof or the like may be applied.

Further, there is no particular limitation as to the type of the ionic crystal or the molecular crystal as long as it does not react with the polymer. However, it is preferable that the ionic crystal or the molecular crystal have a hardness suitable for pulverization with the polymer and a Mohs hardness of 4 or below. From the perspective of ease of removal, a water soluble inorganic salt, such as a sodium chloride, for example, may be used. As to the ionic crystal, aside from the aforementioned sodium chloride, cesium chloride, magnesium oxide, and the like may be used. Further, as to the molecular crystal, naphthalene or the like may be used.

Still further, there is no particular limitation as to the pulverization method used in the pulverization step, and a blade mill (coarse grinding machine), a ball mill, a rod mill, a mortar type grinding machine, or the like may be used.

Hereinafter, an example that embodies a method of manufacturing an electroconductive polymer powder and a method of manufacturing a capacitor electrode material that utilizes the electroconductive polymer powder will be described in detail with respect to a comparative example.

### Example

### Electropolymerization Step

As to the electroconductive polymer that is to be the subject of pulverization, a poly(3-methylthiophene) was prepared by electropolymerization. That is, a two-compartment cell including a working electrode compartment and a counter electrode compartment that were divided by a glass filter was prepared, and a 0.5 M TEABF₄/propylene carbonate solvent to which 3-methylthiophene had been added was poured into the two-compartment cell. Then, electropolymerization was carried out on a platinum electrode, and the poly(3-methylthiophene) was deposited thereon. The electropolymerization condition was: controlled potential electrolysis by application of 0.6 - 0.65 V to an Ag/Ag ion electrode.

### Pulverization Step

Next, as the pulverization step, 1 g of a sodium chloride powder was added to 15 mg of thin pieces of poly(3-methylthiophene) obtained by removing the substance that had been deposited on the platinum electrode. Then, the sodium chloride power and the poly(3-methylthiophene) were mixed and rubbed against each other in a mortar for approximately 10 minutes to obtain a powder mixture.

### Extraction Step

Next, the above-described powder mixture was put into a beaker and distilled water was added thereto and mixed therewith so as to dissolve the sodium chloride within the powder mixture. Then, the mixture was passed through a membrane filter, and the filtrate obtained thereby dried to obtain the poly 3-methylthiophen according to the example. The average diameter of the obtained powder particles was 50 microns.

### Comparative Example

As to the comparative example, only the thin pieces of poly(3-methylthiophene) obtained by the above-described electropolymerization step were put into the mortar, and mixed and ground to obtain the poly(3-methylthiophene) of the comparative example. The average diameter of the obtained powder particles was 2 mm.

### Evaluation

The particles of the powder of the poly(3-methylthiophene) obtained as described above according to the example were extremely fine. In contrast, the particles of the poly(3-methylthiophene) of the comparative example, which contained particles so large as to be visibly discernible to the naked eye, were clearly coarser than those obtained in the example.

### Preparation of Capacitor Electrode Material

The capacitor electrode material according to the example was prepared by mixing 12 mg of the above-described poly(3-methylthiophene) powder of the example with 27 g of a single-layer carbon nanotube powder in a mortar. Further, the capacitor electrode material of the comparative example was prepared by mixing 12 mg of the above-described poly(3-methylthiophene) powder of the comparative example with 27 mg of a single-layer carbon nanotube powder in a mortar.

Using the capacitor electrode material according to the example and that of the comparative example obtained as described above, respective capacitor electrodes were fabricated as described below, and the electro-chemical properties thereof were examined.

That is to say, the capacitor electrode material according to the example and the capacitor electrode material of the comparative example were each mixed with a polyvinylidinefluoride powder at a ratio of 80:20 by mass, and formed under a pressure of 14 MPa into pellets having a 15 mm φ discoid shape. Then, an Au mesh was situated on one face of each of the thus formed pellets, and the pellets were subjected to hot pressing in a hot press under a pressure of 5 MPa at 150 °C to form the respective capacitor electrodes, each having the Au mesh affixed to one face thereof.

Then, the discharge property of each capacitor electrode obtained in the above-described manner was measured under a fixed current. That is to say, the 0.5 M TEABF₄/propylene carbonate solvent was poured into the cells used for the measurement, the capacitor electrode, a platinum counter electrode, and an Ag/Ag ion electrode were set up, a fixed current was continuously supplied between the capacitor electrode and the platinum counter electrode, and the relation between the amount of electricity discharged and the potential of the capacitor electrode was examined. The results revealed that the capacitor electrode according to the example exhibited a relatively moderate reduction in the electrical potential thereof, as shown in FIG. 4, whereas the reduction in electrical potential for the capacitor electrode of the comparative example was drastic compared to that of the capacitor electrode of the example. From these results, it is clear that the capacitor electrode according to the example is capable of handling larger current and has a larger capacity for storing electricity, compared to the capacitor electrode of the comparative example.

Hereinafter, the following items are disclosed.
(1) A polymer powder manufacturing method including:
   a pulverization step for rubbing together a polymer and a readily soluble ionic crystal or a readily soluble molecular crystal to obtain a powder mixture thereof, and
   an extraction step for removing the ionic crystal or the molecular crystal from the powder mixture to obtain a polymer powder.
(2) A polymer powder manufacturing method described in (1), wherein the polymer is an electroconductive polymer.
(3) A capacitor electrode material manufacturing method, wherein the electroconductive polymer obtained according to the polymer powder manufacturing method described in (2) is mixed with a carbon powder.
(4) A capacitor electrode material manufacturing method described in (3), wherein the carbon powder is a carbon nanotube powder.

## Claims

1. A method of manufacturing a capacitor electrode material, **characterized by** comprising:
an adsorption step for adsorbing an electropolymerization monomer to a carbon nanotube; and
a polymerization step for electropolymerizing in an electrolytic solution that substantially contains no electropolymerization monomer the carbon nanotube having the electropolymerization monomer adsorbed thereto so as to obtain an electroconductive polymer-adhered carbon nanotube.

2. A method of manufacturing a capacitor electrode material according to claim 1, **characterized by** further comprising a film thickening step for electropolymerizing the electroconductive polymer-adhered carbon nanotube in an electrolytic solution containing electropolymerization monomer, after the polymerization step has been completed.

3. A capacitor electrode comprising a polarizable electrode and a collector electrode, **characterized in that**
the polarizable electrode includes the capacitor electrode material according to either of claims 1 and 2.

4. A capacitor **characterized by** comprising the capacitor electrode according to claim 3.

5. A capacitor electrode material formed of a carbon nanotube having a coating of electroconductive polymer on the surface thereof, **characterized in that**
a thickness of the electroconductive polymer coating has a dimension of from 1/5 to 5 times the diameter of the carbon nanotube.
